# EUROPÄISCHE PATENTANMELDUNG

(11) **EP 2 036 713 A1**
(43) Veröffentlichungstag der Anmeldung: **18.03.2009**
(21) Anmeldenummer: 07017729.0
(22) Anmeldetag: 11.09.2007
(51) Int. Cl.: B32B 5/18, E04C 2/22

(54) **Verbundplatte auf Basis von HPL-Schichtshoffen**

(71) Anmelder: Quadrant Plastic Composites AG, 5600 Lenzburg 1 (CH)
(72) Erfinder: Die Erfindernennung liegt noch nicht vor
(74) Vertreter: Schmauder & Partner AG Patent- & Markenanwälte VSP

(57) **Zusammenfassung**

Die Erfindung betrifft eine Verbundplatte mit Deckschichten aus HPL-Schichtstoffen und einer Kernschicht aus einem Luftporen enthaltenden, faserverstärkten thermoplastischen Kunststoff.

## Beschreibung

Die Erfindung betrifft eine Verbundplatte auf Basis von HPL-Schichtstoffen mit zwei Deckschichten aus HPL-Schichtstoffen und einer Kernschicht aus einem faserverstärkten thermoplastischen Kunststoff mit einem Gehalt an Verstärkungsfasern von 35 bis 80 Gew.-% und einem Gehalt an Luftporen von 20 bis 85 Vol.-%.

Dekorative Hochdruck-Schichtpressstoffplatten, sogenannte HPL-Platten ("High Pressure Laminates") sind seit langem bekannt; sie sind nach DIN EN 438 und ISO 4586 normiert. Sie werden z.B. als RESOPAL-Schichtpressstoff HPL-Platten vertrieben. Es handelt sich um Mehrschichtplatten, die aus Schichten faseriger Zellulose bestehen, die mit duroplastischen Kunstharzen, insbesondere mit Phenolharz imprägniert sind und eine Oberflächenbeschichtung aus mit Melaminharz getränktem Dekorpapier aufweisen. Dabei ermöglicht die gleichzeitige Anwendung von Wärme (über 120 °C) und hohem Druck (über 5 MPa) das Fliessen und anschliessende Aushärten der duroplastischen Kunstharze, wobei ein homogenes und porenfreies Material mit der Rohdichte von mehr als 1.4 g/cm³ und glatter Oberfläche erhalten wird. Als Oberflächenschicht können bedruckte Papiere, Metallfolien, Furniere, Textilien oder deren Reproduktionen dienen, um besondere ästhetische Effekte zu erzielen. Verwendung finden HPL-Schichtstoffplatten z.B. für Fussböden, Möbelteile und insbesondere für Küchenarbeitsplatten. Sie schmelzen nicht, sind hitze- und lichtbeständig, wasserfest und schlag- und abriebfest. Um eine ausreichende Stabilität und selbsttragende dimensionsstabile Eigenschaften zu erhalten, sollten sie mindestens 5 mm dick sein. Dadurch werden sie aber verhältnismässig schwer.

Der Erfindung lag daher die Aufgabe zu Grunde, leichtere Verbundplatten auf Basis von HPL-Schichtstoffen bereitzustellen.

Diese Aufgabe wird erfindungsgemäss gelöst durch eine Verbundplatte, umfassend
A. zwei Deckschichten aus HPL-Schichtstoffen und
B. einer Kernschicht aus einem faserverstärkten thermoplastischen Kunststoff mit einem Gehalt an Verstärkungsfasern von 35 bis 80 Gew.-% und einem Gehalt an Luftporen von 20 bis 85 Vol.-%.

Die WO-A 2006/071 463 beschreibt u. a. eine Sandwichplatte mit einer Kernschicht aus dehydratisierten Verstärkungsfasern und organischen Fasern, die gegebenenfalls Luftporen enthalten kann, und Deckschichten z. B. aus glasmattenverstärktem Polypropylen, Metall- oder Kunststofffolien. Die Platten können für die Schall- und Wärmeisolierung verwendet werden.

Die WO-A 2005/097 879 beschreibt eine Verbundplatte mit einer Poren enthaltenden Kernschicht aus Thermoplasten und Verstärkungsfasern und Deckschichten, die u.a. aus hochtemperaturbeständigen Thermoplastfolien, Metallfolien, thermisch härtbaren Beschichtungen oder Fasergebilden bestehen können, und die einen "limiting oxygen index" LOI nach ISO 4589 von mindestens 22 aufweisen. Die Deckschichten sollen die Feuer- und Temperaturbeständigkeit und die Rauchgasdichte der Kernschicht erhöhen. Die Verbundplatten werden vor allem im Flugzeugbau, aber auch in Gebäudestrukturen angewandt.

Die Deckschichten A sind die an sich bekannten HPL-Schichtstoffe, die oben ausführlich beschrieben sind. Sie sind vorzugsweise 0.5 bis 2.0 mm, insbesondere 0.8 bis 1.2 mm dick.

Die Kernschicht B besteht aus einem faserverstärkten thermoplastischen Kunststoff mit einem Gehalt an Verstärkungsfasern von 35 bis 80 Gew.-%, vorzugsweise von 40 bis 70 Gew.-%. Die Verstärkungsfasern sind vorzugsweise ungerichtet und vernadelt. Wesentlich ist, dass die Kernschicht Luftporen enthält und zwar 20 bis 85 Vol.-%, vorzugsweise 25 bis 75 Vol.-%. Die Kernschicht ist im fertigen Verbundwerkstoff vorzugsweise 1 bis 10 mm, insbesondere 2 bis 8 mm dick. Halbzeugplatten für die Kernschicht können z.B. hergestellt werden durch trockenes Vermischen von Thermoplastfasern und Verstärkungsfasern, Vernadeln des erhaltenen Mischvlieses, Erwärmen auf Temperaturen oberhalb des Erweichungspunktes des Thermoplasten und Verpressen.

Als Thermoplasten kommen alle verspinnbaren thermoplastischen Kunststoffe in Frage, z.B. Polyolefine, wie Polyethylen und Polypropylen, Polyamide, lineare Polyester, thermoplastische Polyurethane, Polycarbonat, Polyacetale, sowie entsprechende Copolymere und Thermoplastmischungen, ferner hochtemperaturbeständige Polymere, wie Polyarylate, Polysulfone, Polyimide, Polyetherimide und Polyetherketone. Besonders bevorzugt ist Polypropylen mit einem MFI (230°C, 2.16 kg) nach DIN 53735 grösser als 20 g/10 min, vorzugsweise zwischen 25 und 150 g/10 min. Die Thermoplastfasern weisen im Allgemeinen eine mittlere Länge (Gewichtsmittel) von 20 bis 120 mm auf.

Bevorzugte Verstärkungsfasern sind Glasfasern, daneben können auch Kohlenstofffasern (sog. "Karbonfasern"), Basaltfasern und Aramidfasern eingesetzt werden, ferner Naturfasern, z.B. solche aus Flachs, Jute, Hanf, Kenaf, Sisal und Baumwolle. Besonders interessant sind auch Basaltfasern, die gegenüber Glasfasern den Vorteil haben, dass sie bei der thermischen Aufarbeitung von faserverstärkten Formteilen nicht schmelzen und keine Schlacke bilden. Zweckmässigerweise mischt man dabei die teuren Basaltfasern mit Naturfasern, z.B. im Gewichtsverhältnis 10 : 90 bis 50 : 50 ab. Die Verstärkungsfasern weisen im Allgemeinen ebenfalls eine mittlere Länge (Gewichtsmittel) von 20 bis 120 mm auf. Damit sie gut mit den Thermoplastfasern mischbar sind, müssen sie als individuelle, nicht gebundene Fasern vorliegen, d.h. sie dürfen nicht mit polymeren Bindemitteln gebunden sein.

Vorzugsweise erfolgt das Verpressen kontinuierlich auf einer Doppelband- oder Kalanderanlage, insbesondere nacheinander durch ein beheiztes und ein gekühltes Presswerkzeug, in welchem das Mischvlies jeweils bei einem Druck von weniger als 1 bar mindestens 3 sec lang verpresst wird. Durch Variation des Drucks beim Verpressen kann der Luftporengehalt und damit auch die Dichte der Kernschicht im Bereich von 0.1 bis 0.6 g/cm³ gezielt eingestellt werden. Ein derartiges Verfahren ist z. B. in EP-B 593 716, WO 02/062 563, WO-A 2005/037 897 und WO-A 2006/05 682 beschrieben.

Bei einem anderen Verfahren werden Verstärkungsfasern und Thermoplastpartikel nach dem Papierherstellungsverfahren vermischt, das Wasser wird abgepresst, die Matte wird getrocknet und dann heiss zum Halbzeug verpresst. Ein solches Verfahren ist z. B. in US-A 4,978,489 beschrieben.

Die Schichten der Verbundplatte werden vorzugsweise mittels wasserfreier Klebstoffe miteinander verbunden, insbesondere mit schäumendem Einkomponenten-Polyurethankleber, oder mit Schmelzklebern auf Kunststoff-Basis, z. B. Polyurethanen, modifizierten Polyolefinen, Vinylacetat, Ethylenvinylacetat (EVA), Ethylenacrylacetat (EEA) oder Filmklebstoffen, die vorzugsweise aufschäumend eingestellt sind. Auch geeignete Phenolharz- und Melaminharzkleber sind verwendbar. Die verflüssigten bzw. flüssigen Klebstoffe dringen in die an der Oberfläche der Kernschicht befindlichen Poren ein und bilden dadurch eine gute mechanische Verankerung. Die besonders bevorzugten schäumenden Polyurethankleber sind in der Lage, Unebenheiten der faserverstärkten Kernschicht auszugleichen, so dass sich diese nicht durch die Deckschichten hindurch an der Oberfläche der Verbundplatte abbilden können. Auch wird durch die Verwendung geeigneter schäumender Klebstoffe bei entsprechend präzisen Pressverfahren die Einhaltung der gewünschten Dickentoleranz der Verbundplatte erreicht.

Die Deckschichten und die Kernschicht werden zusammen mit dem Klebstoff vorzugsweise bei Temperaturen zwischen 0 und 100 °C bei Drücken zwischen 0.1 und 20 bar diskontinuierlich oder auch kontinuierlich verpresst. Die Abmessungen der erhaltenen Verbundplatten können je nach Anwendungszweck in weiten Grenzen schwanken. Ihre Dicke kann im allgemeinen zwischen 1.5 und 12 mm liegen. Durch Verkleben mehrerer Kernschichten können auch Verbundplatten mit Dicken von mehr als 100 mm hergestellt werden.

Durch Variation der Dichte der Kernschicht können die Materialeigenschaften der Verbundplatte bei gleich bleibender Dicke gezielt eingestellt werden, z. B. Biegefestigkeit, Biege-E-Modul, Scherfestigkeit und Druckfestigkeit.

Eine interessante Anwendung der erfindungsgemässen Verbundplatten sind Laminatfussböden. Bei herkömmlichen Laminatdielen besteht der Kern aus verpressten Holzfasern ("High Density Fiberboard", HDF) und die Deckschichten aus HPL-Schichten. Dabei werden die Dielen bevorzugt leimlos an den Stirn-und Längsseiten miteinander verbunden. In die Verbindungsfuge kann beim Gebrauch, z.B. bei der Reinigung und durch Witterungseinflüsse Feuchtigkeit eindringen, was im Lauf der Zeit zu Anquellung der Randbereiche des Fussbodens führen kann. Durch diese Anquellungen werden die optischen und Gebrauchseigenschaften des Fussbodens erheblich beeinträchtigt. Diese Gefahr besteht bei der erfindungsgemässen Verbundplatte nicht. Da die Kernschicht nicht feuchtigkeitsempfindlich ist, können keine Aufquellungen auftreten, wodurch die Lebensdauer des Fussbodens signifikant verlängert wird. Die erfindungsgemässe Verbundplatte weist also eine hohe feuchtebeeinflusste Dimensionsstabiltät auf. Ausserdem spielt hier wegen der leichteren Kernschicht die Gewichtseinsparung, z.B. für den Transport und das Handling eine grosse Rolle.

Weitere Anwendungsgebiete sind Tischtennisplatten, Aussenmöbelteile und Verkleidungen, z.B. Balkonbrüstungen.

Dadurch, dass in die Deckschichten aus HPL-Schichtstoffplatten eine vielfältige Oberflächengestaltung und Strukturierung der erfindungsgemässen Verbundplatte möglich machen, können vielfältige dekorative Oberflächengestaltungen realisiert werden.

## Patentansprüche

1. Verbundplatte auf Basis von High Pressure Laminat (HPL)-Schichtstoffen, umfassend
A. zwei Deckschichten aus HPL-Schichtstoffen, und
B. eine Kernschicht aus einem faserverstärkten thermoplastischen Kunststoff mit einem Gehalt an Verstärkungsfasern von 35 bis 80 Gew.-% und einem Gehalt an Luftporen von 20 bis 85 Vol.-%.

2. Verbundblatte nach Anspruch 1, **dadurch gekennzeichnet, dass** der thermoplastische Kunststoff Polypropylen ist und die Verstärkungsfasern Glasfasern sind.

3. Verbundplatte nach Anspruch 1 oder 2, **dadurch gekennzeichnet, dass** die Deckschichten 0.5 bis 2.0 mm und die Kernschicht 1 bis 10 mm dick sind.

4. Verbundplatte nach einem der Ansprüche 1 bis 3, **dadurch gekennzeichnet, dass** die Deckschichten und die Kernschicht durch einen wasserfreien Klebstoff miteinander verbunden sind, der in den an der Oberfläche der Kernschicht befindlichen Poren mechanisch verankert ist.

5. Verbundplatte nach einem der Ansprüche 1 bis 4, **dadurch gekennzeichnet, dass** der Klebstoff ein schäumender Einkomponenten-Polyurethankleber, ein Schmelzkleber auf Kunststoff-Basis oder ein Phenolharz- oder Melaminharz-Kleber ist.

6. Verfahren zur Herstellung der Verbundplatte nach einem der Ansprüche 1 bis 5, **dadurch gekennzeichnet, dass** die Deckschichten und die Kernschicht zusammen mit dem Klebstoff bei Temperaturen zwischen 0 und 100 °C bei Drücken zwischen 0.1 und 20 bar diskontinuierlich verpresst werden.

7. Verwendung der Verbundplatten nach einem der Ansprüche 1 bis 6 zur Herstellung von Laminatfussböden, Möbelteilen und Verkleidungen.
